(19)

Europäisches
Patentamt

European
Patent Office

Office européen
des brevets

(11)  EP 2 803 968 B1

(12)  EUROPEAN PATENT SPECIFICATION

(45) Date of publication and mention
of the grant of the patent:
08.05.2019  Bulletin 2019/19

(51) Int Cl.:
$G01M\ 5/00$ $^{(2006.01)}$

(21) Application number: 13167410.3

(22) Date of filing: 13.05.2013

(54) **A process for calculating fatigue and fatigue failure of structures**

Verfahren zur Berechnung von Ermüdung und Ermüdungsversagen von Strukturen

Procédé permettant de calculer la fatigue et la rupture par fatigue de structures

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.11.2014  Bulletin 2014/47**

(73) Proprietor: **Siemens Industry Software NV**
**3001 Leuven (BE)**

(72) Inventors:
• **Hack, Michael**
**67258 Hessheim (DE)**
• **Nuhn, Peter**
**67697 Otterberg (DE)**
• **Liefooghe, Christophe**
**2540 Hove (BE)**
• **Strässer, Stefan**
**67663 Kaiserlautern (DE)**
• **Bruyneel, Michaël**
**4100 Boncelles (BE)**

• **Donders, Stijn**
**3010 Leuven (BE)**

(74) Representative: **Maier, Daniel Oliver**
**Siemens AG**
**Postfach 22 16 34**
**80506 München (DE)**

(56) References cited:
**US-A- 5 419 200**

• **OLUWASEUN A ARAROMI ET AL: "Fast Track
Communication;A finite element approach for
modelling multilayer unimorph dielectric
elastomer actuators with inhomogeneous layer
geometry;A finite element approach for
modelling multilayer unimorph dielectric
elastomer actuators with inhomogeneous layer
geometry", SMART MATERIALS AND
STRUCTURES, IOP PUBLISHING LTD., BRISTOL,
GB, vol. 21, no. 3, 10 February 2012 (2012-02-10),
page 32001, XP020219726, ISSN: 0964-1726, DOI:
10.1088/0964-1726/21/3/032001**

**Description**

**Technical field of the invention**

The invention relates to the field of predicting durability performance and fatigue behaviour of structures.

**Background of the invention**

Manufacturers in the transportation, wind energy and machinery sector are increasingly using lightweight materials, since these allow delivering products with superior mechanical properties with a lower ecological foot print. Especially in the transportation (automotive, aerospace ...) the substantial deployment of lightweight design materials such as composites will be the only viable path to meeting the ever more stringent $CO_2$ emission norms. At present, the massive deployment of lightweight materials in the industrial design and development process is however limited by the lack of predictive modeling tools to predict the macro-level behavior of lightweight materials structures. If better mechanical predictions can be made based on virtual models, the product can be optimized based on virtual simulations (rather than on late and expensive physical testing).

Composite materials can typically withstand many load cycles (i.e. have a good fatigue behavior). But the first damaging events that even change the stiffness of the component occur quite early and also at quite small load cycles. For product design engineers, this means that they cannot design the product with a requirement that 'no fatigue damage should occur at all', since that would lead to typical overdesign of the structure. Instead, the engineer would like to be able to predict the fatigue behavior over the full lifetime - including the changes in stiffness, and the cross influences of the different damage mechanisms. By using the better understanding of the fatigue behavior in the product design decision process, it will be possible to achieve better, lighter and more cost-efficient designs.

In automotive applications, for instance, the analysis and synthesis of fatigue loads have highly improved over the last decades. For the current cars made of metals, a mature virtual design optimization process is in place, which enables the car manufacturers to tailor their cars to be adequate for the actual usage, and to align them with the requirements of different markets, while ensuring to avoid overdesign. This involves complex load schedules for different roads with fully variable loading. In contrast, for composites materials, no mature tools are in place to virtually predict the product performance. This means that expensive physical testing approaches in a rather late stage of the design process are needed to check/validate whether the composite material design meets the requirements.

The problem to be solved is to bring in place a new virtual process to predict the durability of composites structures and to include the new process in a numerical apparatus or toolset that can be used to predict and optimize the durability performance of mechanical structures. The availability of the innovative process and associated toolset will enable the industry to improve their design process for their lightweight products, achieving a better product quality at lower cost. Mandatory ingredients for such a successful methodology are:

- Ability to include the progressive damage in the models, i.e. the ability to predict the evolution of damage in the composites in time, and keep track of the actual damage state in the simulation models.
- Ability to predict the damage accumulation at each moment in time that takes the actual damage into account, the damage evolution towards the next step has to be predicted. This requires a so-called 'hysteresis operator' approach that predicts the increase in damage ($dD/dN$) in each point in the model.
- Ability to include also the influence of variable cyclic loads. Such time-varying loads are what structures in operation (e.g. in automotive or aerospace structures or wind turbines) experience, so they must be designed to withstand this. Variable amplitude loads are often replaced by simplified signals as block loads as they simplify the simulation and the test set up. But if only block loads (i.e. constant loading over time) are used in the design process, this is not sufficient to ensure that the structure can withstand realistic loads during its lifetime. Moreover, in these cases large safety factors are added to the design which contradicts the paradigm of light weight design. Therefore the simulation of fatigue has to include also the influence of variable cyclic loads.

Finite Element (FE) Analysis (FEA) is a well-known numerical technique for modeling a mechanical structure. The model consists of many small & simple 'elements'. Each such element defines a very simple mechanical problem, e.g. a plate-like structure in which the mechanical equations are evaluated in a number of integration or calculation points. After building the numerical FEA model, one can establish a matrix equation of the complete structure, which contains the large list of simple 'elements' problems in relation to each other. Solving this equation allows approximating the mechanical behavior of the structure based on the solution of the many small elements problems. It is state of the art to base fatigue predictions on mechanical FE models. A typical result of a FEA is the mechanical prediction of the stresses & strains in the structure based on a FE model of the structure.

One technique that is already known from failure prediction for metal structures is using SN-curves and linear damage accumulation. An SN-curve represents the magnitude of a stress or load cycle applied to a material as a function of the amount of cycles before fatigue failure occurs, i.e. before it breaks. The data to populate the SN-curves is typically obtained from testing, i.e. obtained from simple standardized samples of material (i.e. so-called "coupon testing"). The SN-curves are derived for a selected load direction (e.g. longitudinal or transversal load). Using the rainflow counting approach, the complex load cycles can be split up in a set of simple load cycles with different amplitudes. Using these amplitudes the number of cycles before failure can then be derived from the SN curves.

Predicting failure using SN-curves can thus handle variable amplitude loads, but cannot take into account multi-axiality. A further disadvantage is that the effect of progressive damage and, thus, the reduction of the stiffness and redistribution of stress in the structure cannot be taken into account. This means that rainflow based approaches can handle stress-strain behavior and damage accumulation only in the case that there is a fixed relationship between stress and strain, and that the same stress-strain cycles always induce the same damage.

Therefore, the use of SN-curves is very limited for composite structures. For variable amplitude loading it is very typical that the largest load cycles - that contribute most to the damage - take a very long time to complete, due to the many nested cycles inside. In this case the approach to only consider cycles when they are completed as in the rainflow approach can no longer be justified.

Traditional fatigue damage accumulation uses rainflow counting and linear Miner-Palmgren damage accumulation. In the case of composites, one experiences that the fatigue behavior is changing over time due to several different damage mechanisms, because the damaging effects are connected to stress-strain hysteresis loops or branches. These loops are typically nested in each other, such that before one large loop closes there may be many small loops that open and close in between. So it is very typical that the largest load cycles - that contribute most to the damage - take a very long time to complete, due to the many nested cycles inside. In this case the approach to only consider cycles when they are completed as in the rainflow approach can no longer be justified.

In "Brokate, M; Dressler, K; Krejci, P: Rainflow counting and energy dissipation in elastoplasticity, Eur. J. Mech. A/Solids 15, . 705-737 (1996)" a method was developed for damage accumulation that can take into account changes in the fatigue and material behavior due to external changes (e.g. temperature). This approach uses two hysteresis operators - one for the stress-strain behavior and one for the damage behavior. Using these operators with fixed stress-strain behavior, and damage evaluation based on SN-curves they lead to the same behavior as the rainflow and SN curve based approaches mentioned before.

In "Nagode, M. & Hack, M., The damage operator approach, creep fatigue and visco-plastic modelling in thermo-mechanical fatigue, SAE International Journal of Materials & Manufacturing, 4(1), 632-637. doi:10.4271/2011-01-0485, (2011)" this approach was extended to the case that the stress-strain behavior and the damage behavior depend on external functions (Temperature) which change both the stress-strain behavior and the damage behavior. Eventhough this prior art enables the inclusion of external parameters it still is not able to include a behavior like for composites where the stress-stain behavior and damage also depends on the damage that is accumulated up to a certain point.

In the prior art publication "Van Paepegem, W.; Development and finite element implementation of a damage model for fatigue of fiber reinforced polymers, Ph.D. thesis, Department of Material Science and Engineering, Ghent university, 2002." a methodology for the simulation of progressive damage and thus composite fatigue simulation is disclosed using the N-Jump algorithm. There the damage accumulation and stress redistribution is calculated using a full finite element analysis at deliberately chosen intervals. The degradation of stiffness in the material is calculated and further extrapolated at corresponding cycles. The disadvantage of this methodology is that it is only applicable for block loading and thus, cannot be used for variable amplitude loading.

US 5419200 discloses a method for assessing the effects of loading forces on a composite material structure

The prior-art publication "Oluwaseum a. araromi et al.: Fast track Communication; A finite element approach for modelling multilayer unimorph dielectric elastomer actuators with inhomogeneous layer geometry, Smart materials and structures, IOP PUBLISHING LTD., Bristol GB, Vol. 21, No. 3, 10 Feb. 2012, page 32001, XP020219926" discloses a finite element approach for modelling multilayer unimorph dielectric elastomer actuators with inhomogeneous layer geometry.

It is the object of the instant invention to overcome the above mentioned disadvantages of the prior art.

The applicant does not want to restrict the scope of the invention solely to composite structures as the invention is also applicable to structures made of other materials. Therefore, the invention also applies to elastomer materials or any other material that has the property that damage accumulates in the material due to load cycles before the structure fails due to fatigue failure.

## Summary of the invention

Accordingly, the instant application relates, in a first aspect, to a method according to claim 1.

It is an advantage that, due to the fact that a hysteresis operator is used and time steps in between the full amplitude of the load cycles are taken into account, nested loop cycles and multiple load cycles with variable amplitudes can be taken into account.

It is an advantage that, due to the fact that the change in material properties is taken into account, fatigue failure for long load cycles can be predicted. These long load cycles, for example, do not represent a short distance on a virtual durability test track simulation, but may represent thousands of kilometres on a virtual test track simulation. Therefore, the prediction will be more accurate and corresponds to a real life case.

It is a further advantage that, due to the fact that the accumulated damage and, hence the change in material properties, are taken into account the local redistribution of stress is accurately simulated and, hence, the prediction of the fatigue failure is more accurate.

Due to the more accurate simulation of the fatigue, it is a further advantage of the instant invention that less overdesign of the composite structure is needed. This results in a lighter structure for a given set of durability and performance requirements of the structure.

According to an embodiment of the first aspect the process further comprises updating the model of the composite structure to an updated model with the change in properties and, for each calculation point, new stresses and strains brought by the load cycles and defining hysteresis loops are determined.

Due to the fact that the model of the composite structure is updated and the stresses and strains in the calculation points are recalculated, it is an advantage that the global redistribution of the stress, and, thus, the reduction or increase in stiffness throughout the composite structure is taken into account.

A second aspect of the invention is realized by a system according to claim 8.

In a third aspect the invention is realized by a software program product according to claim 11.

**Brief description of the drawings**

The invention shall be better understood in light of the following description and of the accompanying drawings were

Figure 1 illustrates a preferred embodiment of the process according to the first aspect of the invention;
Figure 2 illustrates a beam attached to a wall as an example of a composite structure submitted to external forces or loads;
Figure 3 illustrates the variation of a load as a function of time;
Figure 4 illustrates a hysteresis loop with a nested loop cycle;
Figure 5 illustrates the relative stiffness of a composite material as a function of the relative load cycle;
Figure 6 illustrates a change in a hysteresis curve;
Figure 7 illustrates a further embodiment of the process according to the first aspect of the invention;
Figure 8 illustrates an embodiment of a system according to the second aspect of the invention.

**Description of illustrative embodiments**

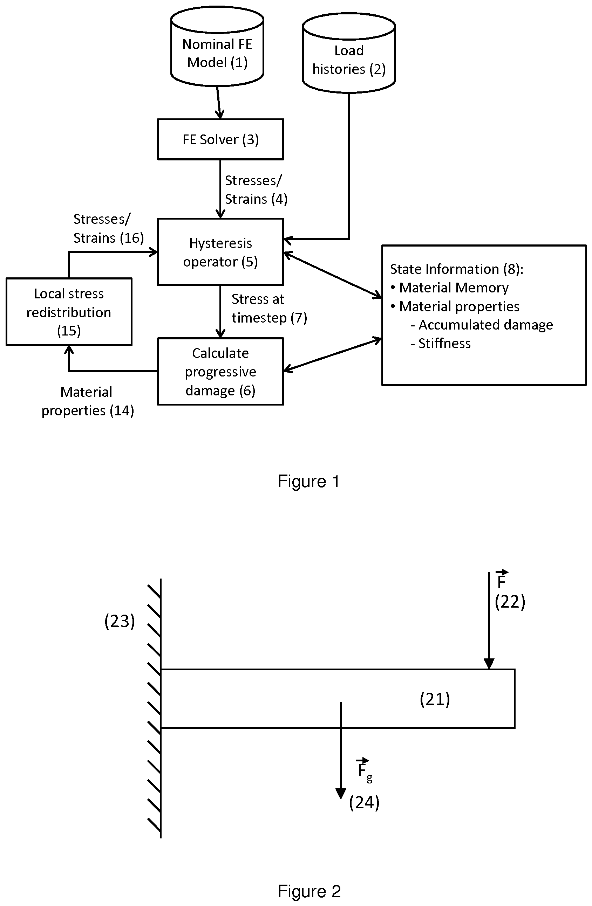

Figure 1 illustrates the several steps of the process according to a preferred embodiment of the first aspect of the invention. By this process, the durability performance of a composite structure can be predicted. In other words, it can be predicted how many load cycles this composite structure would be able to withstand before it fails due to a fatigue failure.

In a first step (1), a model of the composite structure of which the durability performance will be predicted is obtained. In this first step, this is done be modelling the structure by a series of elements comprising one or more calculation points. This may be a Finite Element (FE) model. As well known in the art, such a model divides the structure into a series of simple elements and the interaction between every element of the structure is described by a simple equation whereas, when the structure as a whole would be considered, a set of complex partial differential equations would have to be solved. Such a model typically comprises the geometrical properties of the structure and how it is divided into a series of these simple elements. Next to this, the model also comprises how external forces act on the structure and further comprises the material properties of the structure such as, for example, the stiffness of the structure. In Figure 1, this model is denoted as a Nominal FE model to indicate that it is the initial model used in the beginning of the process.

An illustrative example of such a structure is shown in Figure 2 where a beam structure (21) is attached to a wall (23). Next to the forces that keep the beam attached to the wall, the beam is further submitted to an external force F (22) and the force $F_g$ (24) caused by gravity. The external force (22) could for example be caused by a weight or torsion induced by another structure that is attached to the beam. As a model, a CAD drawing of the beam may be provided together with an indication of where and in which direction all these forces apply. On the basis of this CAD drawing, the beam is then further divided in a series of elements comprising calculation points and a matrix equation defining the interaction between the elements is constructed.

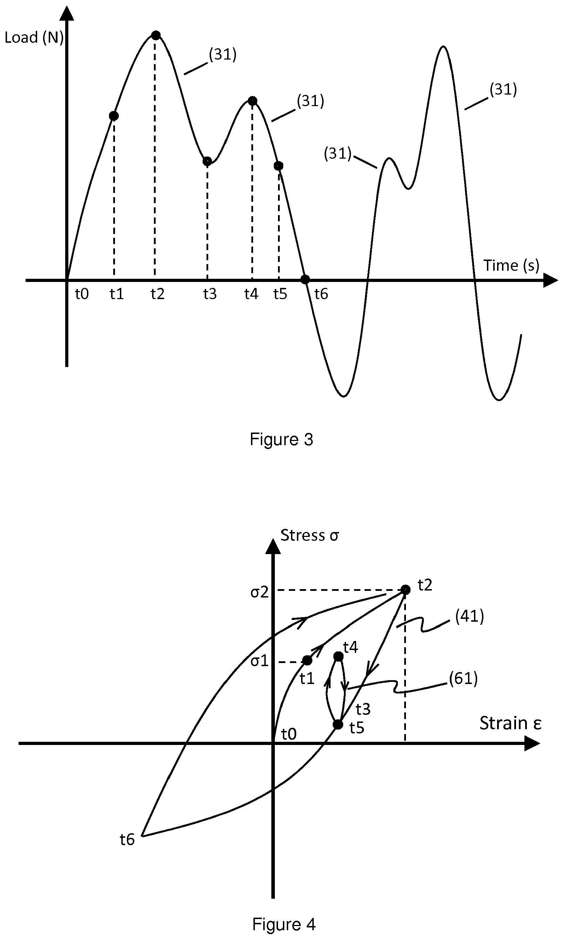

Fatigue failure in a composite structure will occur when the structure is submitted to a series of load cycles, i.e. external force(s) that vary in amplitude over time. In order to predict the durability performance, the process also needs these load cycles as an input. In Figure 1 this is denoted as the Load histories (2). Figure 3 illustrates how such a load (y-axis) may vary in time (x-axis) by different load cycles (31). This variation of the load, typically forces or moments specified in Newton respectively Newtonmeters or equivalent units, may not be repetitive nor have a fixed amplitude Returning to the example of Figure 2, the load cycles of Figure 3 would then represent how the external force (22) acts on the beam structure. A structure may be submitted to different loads having different load cycles. The load cycles will typically correspond to a real life case in which the structure will be used and may be obtained either from simulation either from measurements. For example, when the structure would be the axle of a car the load cycles will correspond to forces caused by bumps in the road, by taking corners, by braking, etc... The load histories can then be constructed by simulating such situations or by actually measuring the external forces acting on an axle of a car during such situations.

In a next step (3) of the process, the stresses and strains (4) brought by the load cycles (2) are determined. Due to the forces induced by the load cycles and comprised in the model of the structure, stress will build up along the structure. Stress is well known to express the internal forces that neighbouring elements or particles of a continuous material exert on each other. Stress is typically expressed in Megapascals (MPa) or Newtons per square millimetre (N/mm$^2$). The calculation of these stresses and strains may be done using a Finite Element (FE) Solver (3) that performs a Finite Element Analysis (FEA) taking as input the Nominal FE model (1). The FE Solver thus also takes as input how external forces act on the structure and the material properties as also defined by the FE model (1). As a result the FE solver will calculate the displacements at the so-called nodes. From these it calculates the related stresses (denoted by $\sigma$) and strains (denoted by $\varepsilon$) values in every element. These stresses may be calculated for a number of calculation points in the element. For composite structures this is typically done also at the different plies. In all the calculation points where the stresses and strains are calculated, the fatigue analysis may be performed. The strain indicates the displacement of an element of the structure caused by the stress. As it is a relative measure, it is defined by the ratio between the local displacement and the global displacement.

In the example of Figure 2, under the force F and $F_g$ stresses would build up along the beam and cause the beam to bend downwards. With the calculation of the stresses and strains by the FE solver one can know how every part of the beam would bend and how it would relate to the internal stresses build up in the beam. The smaller the elements of the model are chosen, the more precise the calculation of the stresses and strains will be, but also the more time it will take to perform the calculation.

The process then proceeds to steps (5) and (6) where an accumulated damage due to the load cycles (2) is predicted and stored (8). These steps will now be explained in more detail.

Step (3) will relate the stresses and strains to the external forces or loads, but only for a static case, i.e. only for non-varying external forces (22). However, to predict the fatigue of the composite structure, the process also needs to take into account the complex variation of the load in time defined by the Load Histories (2). When a structure is submitted to such load cycles, the relation between the stresses and the strains (4) obtained from the FE Solver in every calculation point of the structure will exhibit a memory effect. In other words, the strain is not only dependent on the material but also on the history of the stress, i.e. how the path to the stress was established. This is illustrated in Figure 4 where the variation of the stress and strains in a calculation point of the composite structure is shown and how they evolve from an initial time t0 up to time t6. The timestamps t0-t6 of Figure 3 corresponds to the timestamps t0-t6 of Figure 4. The path t0-t6 in Figure 4 thus shows how the stresses $\sigma$ and strains $\varepsilon$ in a calculation point of the composite structure will evolve under the influence of the varying load, i.e. the load cycles of Figure 3. This load cycles of Figure 3 will follow a hysteresis curve, loop or branch (41) in the representation of Figure 4. As the cyclic variation of the load in time is complex, the hysteresis curves or loops will be nested. In other words, a new loop, e.g. t3-t4-t5 will start before another loop (41) had ended, e.g. t2-t6. Therefore, the stresses and strains (4) brought by the load cycles (2) are defining hysteresis loops (42) (41).

In a step (5), using a hysteresis operator (5), a change in the stress (7) along a portion of the hysteresis loop is now calculated as a function of a change in the load in time. Based on the load histories (2) and the output of the FE Solver (3), a hysteresis operator will calculate the stress $\sigma1$ (7) (see Figure 4) related to a next time step t1 (see Figure 3 and 4). A possible implementation of a hysteresis operator may be found in "Nagode, M. & Hack, M., The damage operator approach, creep fatigue and visco-plastic modelling in thermo-mechanical fatigue, SAE International Journal of Materials & Manufacturing, 4(1), 632-637. doi:10.4271/2011-01-0485, (2011)". Thus, a change in the stress along a portion of the hysteresis loop is calculated as a function of a change in the load in time. Due to the hysteresis effect in the composite structure, the hysteresis operator does not only take into account where it is inside a single loop, but also whether the loop is already nested inside another loop. In order to do so, the hysteresis operator (5) keeps track of the memory of the material. In the step (5), internal state variables (8) will also keep track of where exactly along the hysteresis curve the process is at every execution of step (5) of the process. The state information is thus keeping track of the material memory. In other words, the hysteresis operator (5) comprises storing information of the position in the hysteresis loop (41) as state information (8).

Referring to the example of the beam in Figure 2, the hysteresis operator (5) will calculate the stress in each calculation point of the beam for a certain value of the applied force F (22) at a certain time t1. When the Force applied to the beam would start at zero (no force applied), then go to a maximum at time t3 and return to zero at time t6 (again no force applied), the residual strain will not return to zero and, thus, the beam will remain bended to a certain degree even when no force is applied. This illustrates the memory effect in the material of the beam.

In a further step (6), using the change in the stress (7) from step (5) and the stored accumulated damage, a change in the damage is calculated (6), and, hence, a change in the properties (14), including the stiffness, of the structure in each calculation point is also calculated. As the process is an iterative process, when executing step (6) for the first time the value of the accumulated damage will have an initial predetermined value, zero for example. In a composite structure, every load cycle (31) will produce a change in damage inside the structure. After a certain amount of cycles, the total sum of all the changes in damage, i.e. the accumulated damage, will exceed a certain threshold and fatigue failure will occur. In composite structures the change in damage or progressive damage may be characterized as follows:

$$\frac{\partial d_l}{\partial N} = f(d_l, \sigma(d_l), T, \dots) \quad \text{[eq 1]}$$

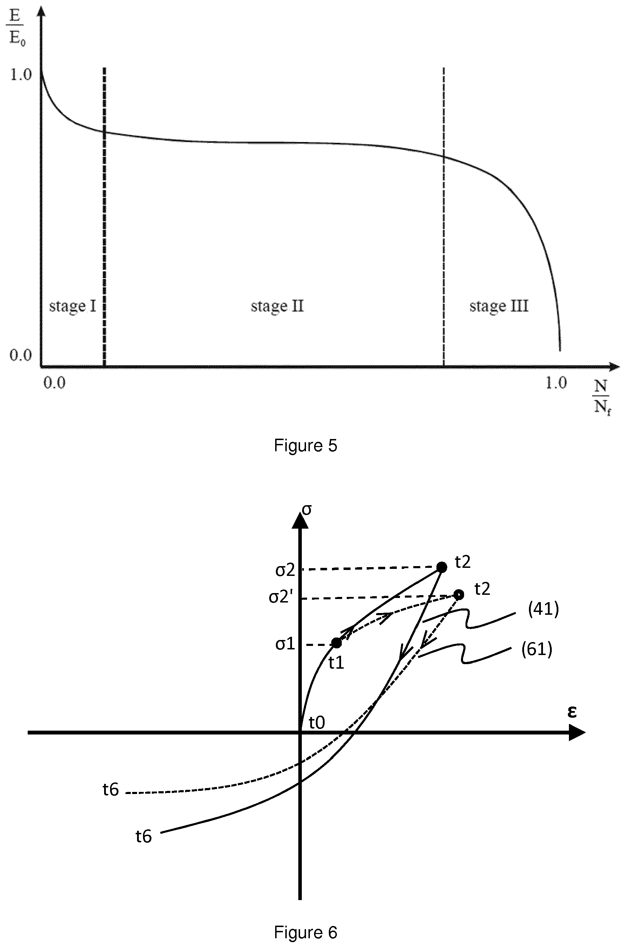

In other words, the change in damage $\frac{\partial d_l}{\partial N}$ in a certain direction l of the material caused by a certain load cycle (N) of the load cycles depends on the already total accumulated damage ($d_l$) and the stress $\sigma$ induced by the load cycle. The stress on its turn also depends on the already accumulated damage $d_l$. This is illustrated by Figure 5 where the change in relative stiffness (E/E0) is plotted against the relative number of load cycles (N/Nf) for a predetermined stress value in a composite material. As apparent from the figure, the change in stiffness depends on the load cycle. The stiffness on its turn may be further related to the accumulated damage by:

$$E_l = E_l^0(1 - d_l) \quad \text{[eq 2]}$$

whereby

$E_l$ is the stiffness of the material in a direction l

$E_l^0$ is the original stiffness before the loading

$d_l$ is the total accumulated damage

The following equation related to the curve in Figure 5 and the above relation between the damage and stiffness then result in the progressive damage as calculated in step 6:

$$\frac{\partial d_l}{\partial N} = c_1.\Sigma_l.e^{\left(-c_2\frac{d_l}{\sqrt{\Sigma_l}}\right)} + c_3.d_l.\Sigma_l^2.\left[1 + e^{\left(c_5.(\Sigma_l - c_4)\right)}\right] \quad \text{[eq 3]}$$

whereby

$\Sigma_l = \dfrac{\frac{\sigma}{1-d_l}}{X_l}$ is the relative stress value, and

$X_l$ is the static strength constant that indicates at which stress static value the structure will be permanently damaged , and

c1, c2, c3, c4 and c5 are constants related to the material obtained by stress measurement of material samples, and

$d_l$ is the total accumulated damage in a direction l of the structure.

The above equations are just an example on how to derive the change in damage and properties of the structure, but the invention is not limited thereto. In general the calculation of the change in damage may directly use characterization data relating the change in damage and properties to the accumulated damage and to the change in the stress as illustrated by Figure 5. Or, as shown by [eq 3], calculating the change in the damage may further comprise using an analytical formula for obtaining the change in the damage, The analytical formula is then an approximation of the characterization data.

The new value of the accumulated damage is then derived from the previous value of the accumulated damage and the progressive damage just obtained. This new value is then stored as state information (8) as part of the material properties until a next iteration of the process. Similarly, a new value of the stiffness $E_l$, which is a material property, is calculated.

Referring to the example of the beam of Figure 2, in step (6) of the process for each calculation point of the beam, one could take the formula for the progressive damage and fill in the value of the obtained stress (7), the already accumulated damage from the state information and the material constants and obtain a value for the change in damage. With this change in damage, the accumulated damage in the state information (8) is then updated to a new value.

As the material stiffness has changed due to the accumulation of damage in the material, the hysteresis curve (41) as depicted in Figure 4 is no longer up to date. The relation between the stresses and strains in each calculation point of the composite structure has changed and needs to be recalculated. Therefore, in a step (15), a further change in the stresses and strains (16) is calculated (15) on the basis of the change in the properties (14) to determine (7) new adapted hysteresis branches. It should be noted that the due to the continuous change in the stress-strain behavior, loops do not need to close anymore, therefore they can also be annotated as branches to indicate the fact that they do not close. In other words, the stresses and strains are locally redistributed in the calculation points of the model of the structure because of the change in the stiffness $E_l$. Physically speaking, the stiffness value $E_l$ is a measure of the slope of the hysteresis curve. As in the recalculation of the stress, the interaction between the elements of the composite structure is not taken into account, the redistribution of the stress is said to be local. As illustrated in Figure 6, this further change in the stresses and the strains (16) will define an adapted hysteresis branch (61).

Referring to the example of the beam of Figure 2, updating the stresses and strains (16) would mean that the beam would bend more or less. This would even be the case when applying the same force, but in a different cycle of the load histories (2). For example, when the stiffness of the elements in the beam would decrease, the beam would bend more for the same applied force in a next load cycle.

After step (15), the process arrives back at step (5) where a further change in the stress (7) along a further portion of said adapted hysteresis branch is calculated (5) as a function of a further change in the load in time. Referring to Figure 3 and Figure 4, this means that a new value of the stress in a calculation point of the composite structure at a next time step t2 is calculated. This is illustrated in figure 6 where the new hysteresis curve (61) leads to a new stress value σ2' at time step t2. If the curve would not have been updated with the new material stiffness value, another erroneous stress value σ2 would have been obtained. In order to be able to proceed along the hysteresis curve, it is necessary that at every step (5) when calculating the change in the stress (7) along a portion of the adapted hysteresis branch the stored information about the material memory comprising the current position in the hysteresis curves is used.

With the new stress value σ2' at time step t2 the process then moves again to step (6) where the progressive damage and new value of the stiffness is obtained as described before. The iteration along steps (5), (6) and (15) then continues while continuously updating the state information (8), i.e. the material memory (e.g. hysteresis branch position) and the change in properties of the material (e.g. stiffness and accumulated damage). At a certain time $t_n$ in the load cycles (2) one of the calculation points in the composite structure will exceed a certain damage accumulation value (and thus related stiffness value) and, thus, fatigue failure will occur. At that moment, the durability performance of the composite structure is known because it is known at which time in the Load Histories (2) the fatigue failure would occur. At that time, the obtained fatigue property of the composite structure might be satisfactory and the structure may be manufactured with the material properties and dimensions as specified by the nominal FE model (1). If not satisfactory the composite structure and, hence, the model can be adapted and the prediction of the durability performance is repeated. This way optimization of the durability performance of the composite structure can be obtained.

Referring to the example of the beam, when going through the iterative steps (5), (6) and (15), at a certain time $t_n$ in a certain calculation point of the beam the damage accumulation would be as such that the stiffness is too low. In other words, the beam would bend too much according to the requirements or it would just break.

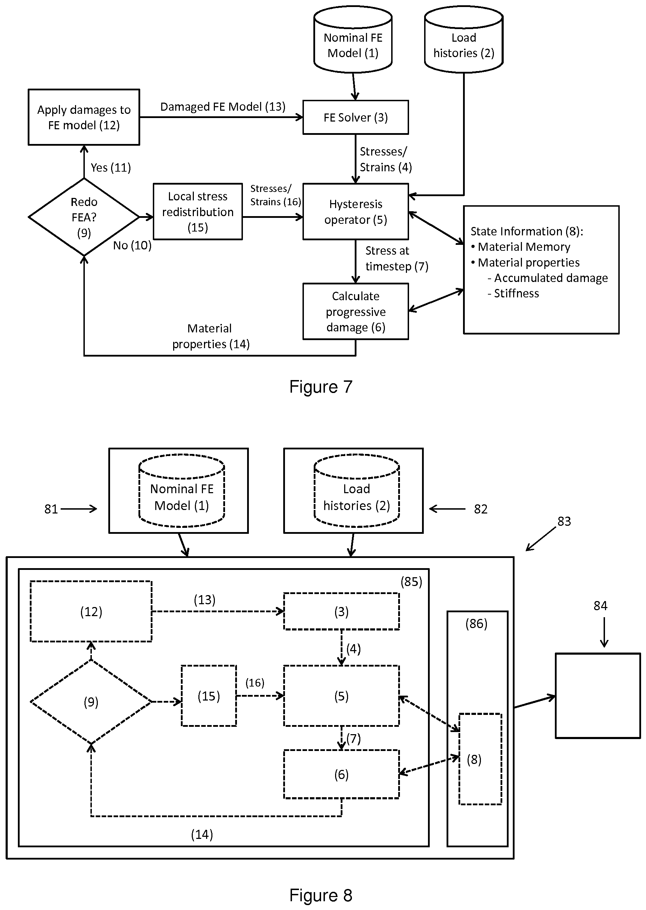

Figure 7 illustrates further steps that improve the accuracy of the process according to the first aspect of the invention. As pointed out before, the accumulation of damage leads to a local degradation of the stiffness in the elements of the composite structure. This also has the consequence that there will be a global redistribution of the stress in the composite structure. This may only be accounted for by a new finite element calculation. Therefore, when performing a global redistribution of the stress, a step (12) of updating the model of the structure with the change in properties to an updated model (13) is performed and, for each calculation point, new stresses and strains (4) brought by the load cycles (2) and defining hysteresis branches are determined. Before performing step (12), it is decided (9) whether to perform the updating (12) of the model of the structure or to perform (15) the calculation of the further change in the stresses and strains (16).

When it is decided to redo the FEA analysis, the state of the system is saved using the state information (8):

- all local damage accumulation states are saved;
- all internal states (material memory) of the hysteresis operator are saved; and
- the time in the load history (2) is saved.

Then, the changes in the material properties, e.g. the stiffness, are applied to the finite element model (12) and, hence, a damaged FE model and, thus, an updated model (13) is obtained. Then, updated stresses and strains (4) are calculated by the FE Solver (3) and the hysteresis operator resumes where it had stopped.

According to a second aspect of the invention, the invention also relates to a system for performing the process according to the first aspect of the invention. An embodiment of such a system is illustrated in Figure 8.

The system comprises a means (81) for modelling the composite structure by a series of simple elements comprising one or more calculation points. This may be done by a computer where a model of a composite structure is drawn using the input devices (mouse, keyboard, ...) of the computer. Using the computer, the model is then further finalized by defining the elements and thus the FE model, the external forces and material properties. Furthermore, the means (81) may also comprise a scanning device to digitize a physical prototype of the structure and a computer on which the FE model is further finalized.

The system further comprises a means (82) for determining the load histories (2) and, thus, load cycles. The afore-mentioned means may comprise another computer or the same computer as comprised in the means (81) for determining the load cycles by simulation. The means (82) may also comprise a test setup to measure the load cycles by an actual physical experiment.

The system may further comprise a computing means (83) for performing the steps (3), (5), (6), (9), (12) and (15) of the process according to the first aspect of the invention. These steps may be written in programming language and compiled to run on a processor (85) which is comprised within the computing means (83). The means (83) may further comprise storage (86) for keeping track of the state information (8). This storage could be the RAM memory or hard drive of the computing means (83).

The system further comprises a means (84) for manufacturing the composite structure accordingly.

**Claims**

1. A method for manufacturing a structure, the method involving a process for predicting the durability performance of a structure enabling optimization of said durability performance, wherein the structure is modeled by a series of calculation points, wherein,
   for each calculation point,

   - the stresses and strains (4) brought by load cycles (2) and defining hysteresis branches are determined (3) by means of a finite element analysis, and
   - an accumulated damage due to said load cycles is predicted (5) (6) based on the previous value of the accumulated damage and the stress induced by said load cycles and stored (8), and
   - using a hysteresis operator (5), a change in the stress (7) along a portion of a hysteresis branch is calculated as a function of a change in the load in time, and
   - using said change in the stress (7) and the stored accumulated damage and the material constants, a change in the damage is calculated (6), and, hence, a
   change in the properties (14), including the stiffness, of the structure at said calculation point is also calculated based on a relation to the accumulated damage, and
   - a further change in the stresses and strains (16) is calculated (15) on the basis of said change in said properties (14) to determine a new adapted hysteresis branch, and
   - using the hysteresis operator, a further change in the stress (7) along a further portion of said adapted hysteresis branch is calculated (5) as a function of a further change in the load in time, and
   at the end of the process, if fatigue failure does not occur, the structure is manufactured with the material properties and dimensions as specified by the model, otherwise the model is adapted and the prediction of the durability performance is repeated.

2. A method according to claim 1 wherein determining said stresses and strains brought by load cycles further comprises performing a finite element analysis on a finite element model (1) of said structure, said finite element analysis being performed based on external forces applied on said structure by said load cycles.

3. A method according to claim 1 or 2 further comprising updating (12) said model of said structure with said change in properties to an updated model (13) and, for each calculation point, new stresses and strains (4) brought by said load cycles (2) and defining hysteresis branches are determined.

4. A method according to claim 3 further comprising, before said updating (12), deciding (9) whether to perform said updating (12) or to perform (15) said calculating said further change in the stresses and strains (16).

5. A method according to claim 1 to 4 wherein using said hysteresis operator (5) further comprises storing information of the position in said hysteresis branch as state information (8), and wherein calculating said change in the stress (7) along a portion of said adapted hysteresis branch uses said stored information.

6. A method according to claim 1 to 5 wherein calculating said change in the damage further comprises using characterization data relating said change in damage and properties to said accumulated damage and to said change in the stress.

7. A method according to claim 6 wherein calculating said change in the damage further comprises using an analytical formula for obtaining said change in the damage, said analytical formula being an approximation of said characterization data.

8. A computer program product for carrying out the software steps (3), (5), (6), and (15) of the process for predicting the durability performance of claim 1.

9. A computer program product according to claim 8 for further carrying out the software step (12) of the process for predicting the durability performance of claim 3.

10. A method according to any one of the claims 1 to 7 wherein said material is any one of the group comprising a composite material or an elastomer material.

**Patentansprüche**

1. Verfahren zum Herstellen einer Struktur, wobei das Verfahren einen Prozess zum Vorhersagen einer dauerhaften Leistungsfähigkeit einer Struktur beinhaltet, der eine Optimierung der dauerhaften Leistungsfähigkeit ermöglicht, wobei die Struktur durch eine Reihe von Berechnungspunkten modelliert wird, wobei für jeden Berechnungspunkt

   - die Belastungen (4), die durch Lastzyklen (2) eingebracht werden und die Hysteresezweige definieren, mithilfe einer Finite-Elemente-Analyse ermittelt werden (3), und
   - ein akkumulierter Schaden infolge der Lastzyklen aufgrund des vorherigen Werts des akkumulierten Schadens und der von den Lastzyklen induzierten Spannung vorhergesagt (5) (6) und gespeichert wird (8), und
   - mithilfe eines Hystereseoperators (5) eine Änderung bei der Spannung (7) entlang eines Teils eines Hysteresezweigs als eine Funktion einer Änderung bei der Last abhängig von der Zeit berechnet wird, und
   - mithilfe der Änderung bei der Spannung (7) und des gespeicherten akkumulierten Schadens und der Materialkonstanten, eine Änderung bei dem Schaden berechnet wird (6), und, folglich auch eine Änderung bei den Eigenschaften (14) einschließlich der Steifigkeit der Struktur an dem Berechnungspunkt aufgrund einer Beziehung zu dem akkumulierten Schaden berechnet wird, und
   - eine weitere Änderung bei den Belastungen (16) aufgrund der Änderung bei den Eigenschaften (14) berechne wird (15), um einen neuen angepassten Hysteresezweig zu ermitteln, und
   - mithilfe des Hystereseoperators eine weitere Änderung bei der Spannung (7) entlang eines weiteren Teils des angepassten Hysteresezweigs als eine Funktion einer weiteren Änderung bei der Last abhängig von der Zeit berechnet wird (5), und
   - am Ende des Prozesses, wenn ein Ermüdungsfehler nicht auftritt, die Struktur mit den Materialeigenschaften und Abmessungen hergestellt wird, wie sie von dem Modell festgelegt werden, andernfalls wird das Modell angepasst und die Vorhersage der dauerhaften Leistungsfähigkeit wird wiederholt.

2. Verfahren nach Anspruch 1, wobei das Ermitteln der Belastungen, die durch die Lastzyklen eingebracht werden, außerdem ein Ausführen einer Finite-Elemente-Analyse an einem Finite-Elemente-Modell (1) der Struktur umfasst, wobei die Finite-Elemente-Analyse aufgrund von externen Kräften ausgeführt wird, die durch die Lastzyklen auf die Struktur ausgeübt werden.

3. Verfahren nach Anspruch 1 oder 2, das außerdem ein Aktualisieren (12) des Modells der Struktur mit der Änderung bei den Eigenschaften in ein aktualisiertes Modell (13) umfasst und wobei für jeden Berechnungspunkt neue Belastungen (4), die durch die Lastzyklen (2) eingebracht werden, und definierende Hysteresezweige ermittelt werden.

4. Verfahren nach Anspruch 3, das außerdem vor dem Aktualisieren (12) ein Entscheiden (9) umfasst, ob das Aktualisieren (12) ausgeführt wird oder ob das Berechnen (15) der weiteren Änderung bei den Belastungen (16) ausgeführt wird.

5. Verfahren nach einem der Ansprüche 1 bis 4, wobei das Verwenden des Hystereseoperators (5) außerdem ein Speichern von Informationen der Position in dem Hysteresezweig als Zustandsinformationen (8) umfasst, und wobei das Berechnen der Änderung bei den Spannungen (7) entlang eines Teils des angepassten Hysteresezweigs die gespeicherten Informationen verwendet.

6. Verfahren nach einem der Ansprüche 1 bis 5, wobei das Berechnen der Änderung bei dem Schaden außerdem ein Verwenden von Charakterisierungsdaten, die sich auf die Änderung bei dem Schaden beziehen, und von Eigenschaften für den akkumulierten Schaden und für die Änderung bei der Spannung umfasst.

7. Verfahren nach Anspruch 6, wobei das Berechnen der Änderung bei dem Schaden außerdem ein Verwenden einer analytischen Formel zum Erhalten der Änderung bei dem Schaden umfasst, wobei die analytische Formel eine Approximation der Charakterisierungsdaten ist.

8. Computerprogrammprodukt zum Ausführen der Softwareschritte (3), (5), (6) und (15) des Prozesses zum Vorhersagen der dauerhaften Leistungsfähigkeit nach Anspruch 1.

9. Computerprogrammprodukt nach Anspruch 8, um außerdem den Softwareschritt (12) des Prozesses zum Vorhersagen der dauerhaften Leistungsfähigkeit nach Anspruch 3 auszuführen.

10. Verfahren nach einem der Ansprüche 1 bis 7, wobei das Material eines aus der Gruppe ist, die aus einem Verbundmaterial oder einem Elastomermaterial besteht.

**Revendications**

1. Procédé de fabrication d'une structure, le procédé mettant en oeuvre une opération de prédiction des performances de longévité d'une structure, permettant une optimisation de ces performances de longévité, la structure étant modélisée par une série de points de calcul, dans lequel, pour chaque point de calcul,

- on détermine (3) les contraintes et déformations (4) apportées par des cycles (2) de charge et définissant des branches d'hystérésis, au moyen d'une analyse aux éléments finis et
- on prédit (5,6), un dommage accumulé dû aux cycles de charge, sur la base de la valeur précédentes du dommage accumulé et de la contrainte induite par ces cycles de charge et on la mémorise (8) et
- en utilisant un opérateur (5) d'hystérésis, on calcule une variation de la contrainte (7) sur une partie d'une branche d'hystérésis, en fonction d'une variation de la charge en fonction du temps et
- en utilisant la variation de la contrainte (7) et le dommage accumulé mémorisé et les constantes de matériau, on calcule une variation du dommage et de là,
on calcule également une variation des propriétés (14), y compris de la rigidité, de la structure à ce point de calcul, sur la base d'une relation au dommage accumulé et
on calcule (15) une variation supplémentaire
- des contraintes et des déformations (16), sur la base de la variation des propriétés (14), pour déterminer une nouvelle branche d'hystérésis adaptée et
- en utilisant l'opérateur d'hystérésis, on calcule (5) une variation supplémentaire de la contrainte (7) suivant une autre partie de la branche d'hystérésis adaptée, en fonction d'une variation supplémentaire de la charge en fonction du temps et
à la fin de l'opération, si une rupture de fatigue ne se produit pas, on fabrique la structure ayant les propriétés de matériau et les dimensions telles que spécifiées par le modèle, sinon, on adapte le modèle et on répète la prédiction des performances de longévité.

2. Procédé suivant la revendication 1, dans lequel, déterminer des contraintes et des déformations apportées par des cycles de charge comprend, en outre, effectuer une analyse aux éléments finis sur un modèle (1) aux éléments finis de la structure, l'analyse aux éléments finis étant effectuée sur la base de forces extérieures appliquées à la structure par les cycles de charge.

3. Procédé suivant la revendication 1 ou 2, comprenant, en outre, la mise à jour (12) du modèle de la structure, en fonction des variations de propriété en un modèle (13) mis à jour et, pour chaque point de calcul, on détermine de nouvelles contraintes et déformations (4) apportées par les cycles (2) de charge et définissant des branches d'hystérésis.

4. Procédé suivant la revendication 3, comprenant, en outre, avant la mise à jour (12), décider (9) si l'on effectue la mise à jour (12) ou si l'on effectue (15) le calcul de la variation supplémentaire des contraintes et déformations (16).

5. Procédé suivant la revendication 1 à 4, dans lequel utiliser l'opérateur (5) d'hystérésis comprend, en outre, mémoriser de l'information sur la position dans la branche d'hystérésis comme information (8) d'état et dans lequel, calculer le changement de la contrainte (7) suivant une partie de la branche d'hystérésis adaptée utilise l'information mémorisée.

6. Procédé suivant la revendication 1 à 5, dans lequel calculer la variation du dommage comprend, en outre, utiliser des données de caractérisation mettant en relation la variation du dommage et des propriétés avec le dommage accumulé et avec la variation de la contrainte.

7. Procédé suivant la revendication 6, dans lequel calculer la variation du dommage comprend, en outre, utiliser une formule analytique pour obtenir la variation du dommage, la formule analytique étant une approximation des données de caractérisation.

8. Produit de programme d'ordinateur pour effectuer les stades (3), (5), (6) et (15) de logiciel de l'opération de prédiction des performances de longévité de la revendication 1.

9. Produit de programme d'ordinateur suivant la revendication 8, pour effectuer, en outre, le stade (12) de logiciel de l'opération, pour prédire les performances de longévité de la revendication 3.

10. Procédé suivant l'une quelconque des revendications 1 à 7, dans lequel le matériau est l'un quelconque du groupe comprenant un matériau composite ou un matériau élastomère.

Figure 1

Figure 2

Figure 3

Figure 4

Figure 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5419200 A

### Non-patent literature cited in the description

- **BROKATE, M ; DRESSLER, K ; KREJCI, P.** Rainflow counting and energy dissipation in elastoplasticity. *Eur. J. Mech. A/Solids,* 1996, vol. 15, 705-737
- **NAGODE, M. ; HACK, M.** The damage operator approach, creep fatigue and visco-plastic modelling in thermo-mechanical fatigue. *SAE International Journal of Materials & Manufacturing,* 2011, vol. 4 (1), 632-637
- Development and finite element implementation of a damage model for fatigue of fiber reinforced polymers. **VAN PAEPEGEM, W.** Ph.D. thesis. Department of Material Science and Engineering, Ghent university, 2002
- Fast track Communication; A finite element approach for modelling multilayer unimorph dielectric elastomer actuators with inhomogeneous layer geometry. **OLUWASEUM A. ARAROMI et al.** Smart materials and structures. IOP PUBLISHING LTD, 10 February 2012, vol. 21, 32001